# FASCICULE DE BREVET EUROPEEN

(11) **EP 3 485 324 B1**
(45) Date de publication et mention de la délivrance du brevet: **10.09.2025**
(21) Numéro de dépôt: 17757788.9
(22) Date de dépôt: 18.07.2017
(51) Int. Cl.: G02C 7/10, G02C 7/02, G02B 5/26, G02B 1/111, G02B 1/118

(54) **PROCÉDÉ DE MARQUAGE PERMANENT VISIBLE D'ARTICLE OPTIQUE ET ARTICLE OPTIQUE MARQUÉ**
SICHTBARES PERMANENTES SCHREIBPROZESS AUF OPTISCHEN ARTIKEL UND MARKIERTER ARTIKEL
VISIBLE PERMANENT MARKING PROCESS ON OPTICAL ARTICLE AND MARKED OPTICAL ARTICLE

(30) Priorité: 18.07.2016 FR 1656851
(43) Date de publication de la demande: 22.05.2019
(73) Titulaire: Essilor International, 94220 Charenton-le-Pont (FR)
(72) Inventeur: MAURICE, Sébastien, 94220 Charenton-Le-Pont (FR); KELLER, Gerhard, 94220 Charenton-Le-Pont (FR); THOMAS, Michèle, 94220 Charenton-Le-Pont (FR)
(74) Mandataire: Santarelli
(86) Numéro de dépôt international: PCT/FR2017/051949
(87) Numéro de publication internationale: WO 2018/015650

(56) Documents cités:
- WO-A1-2015/040338
- WO-A1-2015/040338
- JP-A- 2016 007 612
- US-A1- 2004 095 645
- US-A1- 2006 051 501
- US-A1- 2014 016 083
- US-A1- 2016 207 249

## Description

La présente invention a trait au domaine général du marquage permanent visible d'articles optiques, typiquement de verres ophtalmiques, revêtus d'un revêtement interférentiel multicouche.

On sait que les lentilles ophtalmiques, tel que les verres de lunettes, sont soumises à différentes étapes de fabrication. Une de ces étapes comprend le marquage, dit permanent, de la lentille ophtalmique sur une de ses faces. Le marquage permanent technique est formé par gravure, ou micro-gravure, représentant des points ou des croix et identifiant un point particulier (par exemple le centre optique de la lentille ophtalmique ou le point de référence de prisme pour une lentille progressive), ou des traits d'axes (par exemple pour indiquer l'axe horizontal selon lequel l'astigmatisme est corrigé), ou des formes limitant une zone particulière (par exemple, la zone de vision de près ou la zone de vision de loin dans le cas d'une lentille progressive).

Ces marquages permanents, techniques ou commerciaux, sont souvent réalisés sur une face, face avant ou face arrière, des lentilles ophtalmiques, certains marquages pouvant être en face avant et d'autres en face arrière. Par « face arrière » ou « face intérieure » (généralement concave) du substrat, on entend la face qui, lors de l'utilisation de l'article, est la plus proche de l'œil du porteur. Inversement, par « face avant » ou « face extérieure » (généralement convexe) du substrat, on entend la face qui, lors de l'utilisation de l'article, est la plus éloignée de l'œil du porteur.

Les méthodes de marquage d'articles optiques les plus répandues à l'heure actuelle sont le marquage à l'encre et le marquage (par faisceau) laser.

Le marquage à l'encre présente les inconvénients qu'il est difficile de trouver une encre permanente compatible avec tout type de surface de verre ophtalmique, et que ce type de marquage est non seulement visible par un observateur extérieur mais également par le porteur du verre ophtalmique.

Les documents US 2004/0095645 et EP 0677764 de la société Jax Holdings Inc. décrivent chacun un procédé de construction d'un revêtement interférentiel par dépôt successif de couches sur un substrat transparent, au cours duquel un masque formant un motif est imprimé sur une couche de base avant le dépôt des couches suivantes. Le masque est imprimé avec une encre configurée pour être nettoyée à l'aide d'un solvant. Le masque est enlevé après le dépôt des couches suivantes de sorte que le revêtement interférentiel présente une épaisseur moindre dans les parties qui étaient occupées par le masque. Le revêtement présente des propriétés de réflexion différentes en fonction de son épaisseur, ce qui rend le motif visible. Une telle technique est longue et coûteuse, et requiert l'utilisation de machines complexes.

Le marquage laser peut également être réalisé par ablation (i.e. retrait d'une quantité de matière) formant gravure de la surface. Ainsi, le marquage est généralement formé d'une suite de points dits points de marquage (appelés aussi « spots »), chaque point de marquage étant réalisé par une ou plusieurs impulsions du laser. Dans ce cas, le marquage présente une visibilité qui dépend de la profondeur et de la largeur des points de marquage, ainsi que de l'épaisseur et de la nature de la ou des couches ablatées. Ce marquage doit également être positionné en dehors du champ de vision du porteur de verre ophtalmique pour ne pas perturber sa vision.

Le document US 2014/0016083 décrit une amélioration de cette dernière technique, selon laquelle un marquage peut être réalisé par faisceau laser sur la surface convexe d'un verre ophtalmique après dépôt sous vide d'un revêtement de couches minces d'oxydes. Ces couches minces sont appliquées dans un certain ordre, et sont ensuite, exposées successivement au faisceau laser, et donc ablatées successivement. La surface traitée présente donc une visibilité différente par rapport à la surface non traitée. Cela permet de réaliser un marquage visible par un observateur extérieur, car des couleurs différentes sont visibles par un observateur extérieur en cas d'irradiation par la lumière blanche.

Cependant, cette solution ablative au moyen d'un faisceau laser présente le problème majeur que le marquage n'est pas aisément contrôlable, principalement en profondeur. Par conséquent, les points de marquage réalisés par répétition d'une étape de marquage en différents points appartenant à un même pixel ne sont généralement pas jointifs, ce qui implique que le marquage n'est pas continu. Selon ce document, une succession de multiples ablations partielles en un même pixel permet d'éviter le problème d'une gravure réalisée de manière trop importante (i.e. trop de faisceau laser en une localisation donnée), qui pourrait conduire à l'effet non désiré qu'un revêtement du verre ophtalmique, tel un revêtement antireflet ou bien un revêtement anti abrasion, est attaqué, en partie ou en totalité, par le faisceau laser.

Le document JP 2016 007612 A présente un marquage optique.

Un des objets de l'invention est de fournir un procédé de marquage d'article optique palliant les inconvénients de l'état de la technique, en particulier les problèmes d'ablation non désirée de tout ou partie d'un revêtement de l'article optique.

L'invention a ainsi pour objet, sous un premier aspect, un procédé de marquage d'article optique comportant au moins une étape d'utilisation d'une machine de marquage sur un article optique :
La machine de marquage étant une machine de marquage par faisceau électromagnétique, de préférence par faisceau laser, comportant une source électromagnétique, de préférence une source laser, configurée pour émettre un faisceau ayant une longueur d'onde de rayonnement déterminée dite longueur d'onde de marquage ;
L'article optique étant un article optique comportant un substrat ayant une face principale revêtue d'un revêtement interférentiel, ledit revêtement interférentiel comprenant au moins deux couches superposées dites couche intérieure et couche extérieure, la couche intérieure étant située entre le substrat et la couche extérieure, le revêtement interférentiel étant tel qu'il présente un coefficient de réflexion Re dans le domaine visible (380-780 nm);
L'utilisation comprenant l'insolation d'au moins la couche intérieure en un point donné dit point de marquage, au moyen du faisceau laser à la longueur d'onde de marquage, de façon à ablater, au point de marquage, la couche intérieure sur au moins une partie de son épaisseur, et toute couche située entre la source électromagnétique et la couche intérieure; et étant telle que la zone ablatée présente un coefficient de réflexion Rm dans le domaine visible (380-780 nm), Rm étant différent de Re d'au moins 3 %;
La couche intérieure absorbant la longueur d'onde de marquage de manière plus importante que toute couche située entre la source électromagnétique et la couche intérieure.

L'invention a aussi pour objet, sous un second aspect, un article optique comportant un substrat revêtu d'un revêtement interférentiel comprenant deux couches de matériaux superposées dites couche intérieure et couche extérieure, la couche intérieure étant située entre le substrat et la couche extérieure, le revêtement interférentiel étant tel qu'il présente un coefficient de réflexion Re dans le domaine visible (380-780 nm);

Ledit article comprenant un motif de marquage à la surface du revêtement interférentiel, le motif de marquage étant formé par une pluralité de points de marquage sensiblement identiques, chaque point de marquage correspondant à l'absence localisée de la couche intérieure et de toute couche située entre ladite surface et la couche intérieure, la zone ablatée présentant un coefficient de réflexion Rm dans le domaine visible (380-780 nm) tel que Re est différent de Rm d'au moins 3 %, le motif de marquage étant de préférence continu. De préférence, un tel article optique est obtenu par le procédé de marquage selon l'invention.

L'invention est décrite de manière plus détaillée ci-après.

Le procédé selon l'invention permet donc de réaliser en un point de marquage une ablation localisée directe d'au moins une partie de la couche intérieure et indirecte des couches situées entre la source électromagnétique et la couche intérieure.

L'invention permet donc avantageusement le contrôle du procédé de marquage, en particulier de la profondeur de la gravure, ce qui est très avantageux par rapport aux procédés de l'état de la technique. Sans vouloir être liée par une quelconque théorie, la demanderesse pense que cela est principalement dû au fait que le faisceau électromagnétique parvient à insoler la couche intérieure qui est en matériau très absorbant à la longueur d'onde du rayonnement comparativement aux autres couches présentes.

En effet, selon l'invention, chacune des couches de matériau comprise entre la source électromagnétique et la couche intérieure est au moins partiellement transparente à la longueur d'onde de marquage, c'est-à-dire qu'elle n'absorbe pas au moins en partie à cette longueur d'onde de marquage. De préférence, cette couche est au moins semi-transparente à cette longueur d'onde de marquage, c'est-à-dire qu'elle laisse passer plus de la moitié de l'énergie de cette longueur d'onde de marquage.

Par conséquent, lors de l'exposition au faisceau électromagnétique, cette couche intérieure reçoit la majeure partie de l'énergie transmise et est donc dégradée de façon sélective. Etant donné que les couches comprises entre la couche intérieure et la source électromagnétique sont généralement des couches d'oxydes de très faible épaisseur, la dégradation, voire la sublimation de la couche intérieure, désolidarise de fait ces couches qui peuvent ensuite être évacuées.

Ainsi, le faisceau électromagnétique vise avantageusement à ablater la couche intérieure, et permet indirectement l'ablation, le plus souvent par décollement, de toute couche située entre la source électromagnétique et la couche intérieure, et donc en particulier de la couche extérieure. En d'autres termes, la couche intérieure est détruite (partiellement ou totalement) par le faisceau, les couches comprises entre le faisceau et la couche intérieure étant détruites/retirées par effet collatéral de la destruction de la couche intérieure.

L'ablation est telle que l'unique point de marquage qui en découle a généralement une forme sensiblement cylindrique d'axe sensiblement perpendiculaire à la surface de la couche intérieure la plus éloignée du substrat avant que celle-ci soit ablatée.

Il est à noter que lorsque l'invention est appliquée à une lentille ophtalmique comportant un revêtement antireflet, non seulement les valeurs d'intensité de réflexion entre la zone ablatée et la zone non ablatée sont différentes, mais dans un mode de réalisation supplémentaire, la chroma, présentée dans un système L, a*, b*, est différente entre les deux zones. La zone non ablatée peut ainsi avoir une couleur de réflexion résiduelle verte pâle, par exemple pour la lentille comportant un revêtement Crizal Forte^{®}, avec une valeur de réflexion d'environ 0,8%, et la zone ablatée a une couleur de réflexion plutôt bleue pâle.

Plus généralement, le procédé de marquage selon l'invention est avantageusement tel que la réflexion au point de marquage a une couleur, en saturation (hue : h*) et/ou en teinte (Chroma : C*), différente de celle de la réflexion de la zone non ablatée.

Ainsi, le contraste entre la zone ablatée et la zone non ablatée permettant d'observer le motif reposant principalement sur une différence d'intensité de réflexion peut être amélioré par une différence de couleur de réflexion. L'article optique selon l'invention n'est pas forcément un article à faible transmittance comme un verre solaire. Il peut être également quasiment transparent.

Il faut noter cependant que le point de focalisation du laser n'est pas nécessairement situé dans la couche intérieure du revêtement interférentiel. Il est même d'ailleurs le plus souvent en dehors de celui-ci, typiquement 1 à 2 mm en dehors de celui-ci, par exemple à 2 mm au-dessus de l'article optique. Cela est par exemple décrit dans la demande de brevet WO 2015/040338 de la demanderesse.

Par « élément compris entre A et B », on entend, sauf précision contraire, que l'élément est situé entre A et B mais n'est ni A ni B.

Par « élément compris dans un intervalle de A à B » ou « élément de A à B », on entend, sauf précision contraire, que l'élément est situé entre A et B et peut être A ou B. Par «ensemble des éléments allant de A à B », on entend, sauf précision contraire, l'ensemble formé de A, de B et de tout élément situé entre A et B.

Par « insoler », on entend selon l'invention exposer à un faisceau électromagnétique. Cela conduit à enlever de la matière, c'est-à-dire à ablater. L'insolation est effectuée selon l'invention au moyen de la machine de marquage.

Par « zone non ablatée », on entend selon l'invention toute partie de la face principale n'ayant pas été insolée et donc n'ayant pas été ablatée.

Par « revêtement interférentiel » (appelé également filtre interférentiel ou filtre dichroïque), on entend au sens de l'invention, tout revêtement d'au moins deux couches dont les indices et les épaisseurs conduisent à atténuer et/ou amplifier le coefficient de réflexion d'une surface de l'article optique par un mécanisme d'interférence, constructive ou destructive, sur tout ou partie des longueurs d'ondes comprises dans le visible, c'est-à-dire dans l'intervalle (380 nm-780 nm). Ce filtre par réflexion est donc constitué d'une succession de minces couches, dont le principe de fonctionnement repose sur l'interférence des réflexions successives sur chacun des dioptres rencontrés. Les interférences peuvent, selon l'épaisseur des couches et la longueur d'onde, être constructives ou destructives. La partie qui n'est pas transmise est réfléchie. Dans le cas des revêtements antireflets, les diverses réflexions interfèrent pour fortement s'atténuer. À l'inverse, lorsque toutes réflexions sont en phase, on obtient des revêtements interférentiels miroirs présentant un très fort facteur de réflexion.

Un « revêtement antireflet » se définit comme un revêtement déposé à la surface d'un article optique, qui améliore les propriétés anti-réfléchissantes de l'article prêt pour son utilisation. Il permet de réduire la réflexion de la lumière à l'interface article-air sur une portion relativement large du spectre visible.

Les revêtements antireflets sont bien connus dans la technique et des exemples particuliers sont décrits dans la demande US2008/0206470. Le revêtement antireflet de la présente invention peut inclure toute couche ou revêtement de couches qui améliore les propriétés anti-réfléchissantes de l'article optique final, sur au moins une partie du spectre visible, de façon à accroitre la transmission de la lumière et réduire la réflectance de la surface à l'interface air-article optique.

Comme expliqué ci-dessus, l'invention concerne aussi un revêtement interférentiel de type miroir.

Le revêtement interférentiel, qu'il soit revêtement anti reflet ou non, de l'article optique selon l'invention comporte le revêtement interférentiel selon l'invention telle que défini précédemment.

En particulier, au sens de l'invention, le « revêtement interférentiel » ne comprend pas tout revêtement anti-salissure et/ou anti-brouillard et/ou anti-pluie et/ou hydrophobe et/ou oléophobe et/ou hydrophile qui a généralement une épaisseur inférieure ou égale à 2 nm et ne participe que de façon négligeable à atténuer ou amplifier la réflexion. Ainsi, toute couche du revêtement interférentiel a un effet sur le mécanisme d'interférence.

Selon l'invention, « intérieur » fait référence au côté le plus proche du substrat et « extérieur » fait référence au côté le plus éloignée du substrat. Par conséquent, on entend respectivement par « couche intérieure » et « couche extérieure », sauf mention explicitement contraire, « la couche du revêtement interférentiel la plus proche du substrat parmi les couches du revêtement interférentiel » et « la couche du revêtement interférentiel la plus éloignée du substrat parmi les couches du revêtement interférentiel ».

La « couche extérieure » peut être recouverte d'une éventuelle couche supplémentaire anti-salissure ou anti-pluie ou anti-brouillard, ou même d'une couche temporaire ayant pour vocation d'augmenter l'adhérence, par exemple pour une étape de détourage, et destinée à être retirée pour une utilisation de l'article optique par un utilisateur final. Une telle couche supplémentaire est habituellement connue sous le nom de « topcoat », et n'appartient pas, comme expliqué ci-dessus, au revêtement interférentiel au sens de l'invention.

Par « la couche intérieure absorbant la longueur d'onde de marquage de manière plus importante que toute couche située entre la source électromagnétique et la couche intérieure », on entend selon l'invention que le coefficient d'absorption à la longueur d'onde de marquage de la couche intérieure est supérieur d'au moins 10%, de préférence d'au moins 20%, au coefficient d'absorption à la longueur d'onde de marquage de toute autre couche, située entre la source électromagnétique et la couche intérieure.

Le « coefficient d'absorption » représente l'absorption à une longueur d'onde du spectre visible, et est défini selon l'invention comme le rapport entre l'absorbance A et le chemin optique L (= A/L) pour un faisceau électromagnétique de longueur d'onde donnée (ici dans le domaine du visible) dans un milieu donné. Ce rapport est exprimé en m⁻¹ ou cm⁻¹, en particulier selon la norme ISO/CD 11551.

Par « de manière plus importante », on entend selon l'invention de manière discernable par un homme du métier, pour convenir au but recherché par l'invention.

Par « coefficient de réflexion » (Re ou Rm selon l'invention), au sens de l'invention, on entend le taux de lumière réfléchie par la surface d'un article optique, illuminée par un illuminant couvrant au moins l'ensemble du spectre visible, par exemple l'illuminant solaire ou l'illuminant D65. Le taux de réflexion est de préférence mesuré avec un rayon de lumière incidente à la surface avec un angle de 2° ou de 10°. Lorsque cela n'est pas précisé, le coefficient de réflexion ne tient compte que de la lumière visible, c'est-à-dire la lumière ayant une longueur d'onde comprise entre 380 nm et 780 nm.

Le « facteur de transmission », ou la » transmittance » Tᵥ (tau indice v) correspond à la fraction de flux lumineux qui traverse un article optique, en fonction de la longueur d'onde, illuminée par un illuminant couvrant au moins l'ensemble du spectre visible, par exemple l'illuminant solaire ou l'illuminant D65. Le facteur τᵥ correspond à une définition internationale normalisée (norme ISO 13966:1998) et est mesuré conformément à la norme ISO 8980-3. Il est défini dans la gamme de longueur d'onde de 380 à 780 nm.

Par « transparent », on entend selon l'invention n'absorbant pas à une longueur d'onde du visible [380-700 nm], soit, en d'autres termes, qu'une image observée à travers le produit qualifié de transparent est perçue sans perte significative de contraste ou de qualité.

La couche intérieure est la couche du revêtement interférentiel la plus proche du substrat. Elle est située entre le substrat et la couche extérieure du revêtement interférentiel, mais n'est pas nécessairement en contact avec le substrat ni avec la couche extérieure. Ainsi, une ou plusieurs couches d'un ou plusieurs revêtements intermédiaires peuvent être disposées entre le substrat et la couche intérieure, et entre la couche intérieure et la couche extérieure. De plus, la couche intérieure ne recouvre pas forcément complètement le substrat bien que, préférentiellement, elle le recouvre.

Toute couche éventuelle située entre le substrat et la couche intérieure est au moins partiellement transparente à la longueur d'onde de marquage, c'est-à-dire qu'elle n'absorbe pas au moins en partie à cette longueur d'onde de marquage. De préférence, cette couche est au moins semi-transparente à cette longueur d'onde de marquage, c'est-à-dire qu'elle laisse passer plus de la moitié de l'énergie de cette longueur d'onde de marquage.

De même, la couche extérieure n'est pas nécessairement en contact avec la couche intérieure. En outre, une ou plusieurs couches supplémentaires peuvent être disposées au-dessus de la couche extérieure, comme indiqué plus haut. En d'autres termes, la couche extérieure n'est pas forcément la couche de l'article optique la plus éloignée du substrat. Ces couches supplémentaires sont par exemple des couches temporaires utilisées dans le cadre de la fabrication mais n'ayant pas vocation à être présentes sur l'article optique qui sera utilisé par un utilisateur final. Ce peut être par exemple, dans le cas de lentilles ophtalmiques, un revêtement utilisé pour permettre le détourage des verres afin qu'ils soient mis à la forme d'une monture, lesdites couches supplémentaires étant enlevées après cette mise à la forme.

Bien que l'article optique selon l'invention puisse être un article quelconque, tel qu'un écran, un vitrage, un verre de protection utilisable notamment en environnement de travail, ou un miroir, il est de préférence un verre ophtalmique, et encore mieux une lentille ophtalmique, pour lunettes, ou une ébauche de lentille ophtalmique telle qu'une lentille optique semi-finie, en particulier un verre de lunettes. La lentille peut être une lentille claire, polarisée, colorée ou une lentille photochrome, ou être adjointe à un élément actif tel qu'un dispositif de réalité augmentée, un dispositif électrochrome ou électrofocal. La lentille peut être une lentille sans puissance optique, avec une puissance optique, simple ou complexe, voire être une lentille progressive ou bi ou multifocale.

Un article optique possède généralement, du côté de la couche externe la plus éloignée du substrat, un revêtement interférentiel, de préférence un revêtement antireflet, tel qu'il est connu de l'homme du métier, de façon à empêcher la formation de reflets parasites gênants pour le porteur du verre ophtalmique et ses interlocuteurs. C'est ce revêtement interférentiel qui est marqué par le procédé de marquage selon l'invention.

Ainsi, typiquement, un verre ophtalmique est le plus souvent pourvu d'un revêtement antireflet mono- ou multicouche, généralement en matière minérale. Un tel revêtement interférentiel peut être, sans limitation, un revêtement antireflet, un revêtement réfléchissant (miroir), un filtre infrarouge ou un filtre ultraviolet ou un revêtement interférentiel fonctionnant comme un revêtement antireflet sur une partie du spectre lumineux et fonctionnant comme un miroir partiel aux environs d'une ou plusieurs gammes de longueurs d'ondes, de préférence un revêtement antireflet.

Le substrat est transparent aux longueurs d'onde du visible [380-780nm], et présente des faces principales avant et arrière.

Le substrat selon l'invention est de préférence un verre organique, par exemple en matière plastique thermoplastique ou thermodurcissable. Avant le dépôt du revêtement interférentiel sur le substrat éventuellement revêtu, par exemple d'au moins une couche de revêtement anti-abrasion et/ou anti-rayures, il est courant de soumettre la surface dudit substrat éventuellement revêtu à un traitement d'activation physico-chimique, destiné à augmenter l'adhésion de revêtement interférentiel.

Le revêtement interférentiel selon l'invention peut être présent sur la surface de l'une au moins des faces principales du substrat nu, c'est-à-dire non revêtu, ou sur l'une au moins des faces principales d'un substrat déjà revêtu d'au moins une couche de revêtement fonctionnel. Mais il peut également être présent sur la surface des deux faces principales du substrat de l'article optique.

Par « revêtement fonctionnel », on entend au sens de l'invention au moins un revêtement choisi parmi une liste non-exhaustive comprenant les revêtements anti-rayures, les revêtements anti-chocs ou les revêtements améliorant l'adhésion, les revêtements teintés, antistatiques ou autres, les films ou revêtements comportant une fonction polarisée, ou une fonction photochromique, ou bien les structures permettant une fonction active, par exemple électrochromique.

Ainsi qu'il est bien connu, les revêtements interférentiels, de préférence les revêtements antireflet, sont classiquement des revêtements multicouches comprenant usuellement des couches de haut indice de réfraction (HI) et des couches de bas indice de réfraction (BI).

Les couches HI sont bien connues de la technique. Elles comprennent généralement un ou plusieurs oxydes minéraux tels que, sans limitation, la zircone (ZrO₂), l'oxyde de titane (TiO₂), le pentoxyde de tantale (Ta₂O₅), l'oxyde de néodyme (Nd2O5), l'oxyde d'hafnium (HfO₂), l'oxyde de praséodyme (PrTiO₃), La₂O₃, Nb₂O₅, Y₂O₄, l'oxyde d'indium In₂O₃ ou l'oxyde d'étain SnO₂. Les matériaux préférés sont TiO₂, Ta₂O₅, PrTiO₃, ZrO₂, SnO₂, In₂O₃ et leurs mélanges.

Les couches BI sont également bien connues et peuvent comprendre, sans limitation, SiO₂, MgF₂, SrF₄, de l'alumine (Al₂O₃) en faible proportion, AlF₃, et leurs mélanges, de préférence SiO₂.

Au moins une de ces couches peut être électriquement conductrice. Cela permet ainsi de rendre l'article optique antistatique. Par « antistatique », on entend la propriété de ne pas retenir et/ou de ne pas développer une charge électrostatique appréciable. Un article optique est généralement considéré comme ayant des propriétés antistatiques acceptables lorsqu'il n'attire pas ou ne fixe pas la poussière et les petites particules après que l'une de ces surfaces a été frottée au moyen d'un chiffon approprié. La couche électriquement conductrice peut être localisée à différents endroits de revêtement interférentiel, pourvu que les propriétés interférentielles de l'article optique, par exemple anti-réfléchissantes, ne soient pas perturbées. Elle doit être suffisamment fine pour ne pas altérer la quasi-transparence du revêtement interférentiel. Généralement, son épaisseur varie entre 0 et 100 nm, de préférence dans un intervalle de 2 à 25 nm, de façon encore plus préférée dans un intervalle de 4 à 15 nm. La couche électriquement conductrice, qui fait partie du revêtement interférentiel, comprend de préférence un oxyde métallique choisi parmi les oxydes d'indium, d'étain, de zinc et leurs mélanges. L'oxyde d'étain-indium (In₂O₃:Sn, oxyde d'indium dopé à l'étain) et l'oxyde d'indium (In₂O₃), ainsi que l'oxyde d'étain SnO₂, sont préférés.

Par exemple la demande de brevet français FR 2943798 de la demanderesse décrit un article optique à propriétés antistatiques et antireflet ou réfléchissantes, comprenant un substrat ayant au moins une surface principale revêtue d'un revêtement antireflet ou réfléchissant, ledit revêtement comprenant au moins une couche électriquement conductrice à base d'oxyde d'étain, c'est-à-dire comprenant au moins 30% en masse d'oxyde d'étain par rapport à la masse totale de la couche électriquement conductrice. Un tel article optique peut avantageusement être marqué par le procédé de marquage selon l'invention, la couche électriquement conductrice étant particulièrement adaptée pour être la couche intérieure selon l'invention à certaines longueurs d'ondes de marquage.

Le revêtement interférentiel peut également comporter une sous-couche (c'est-à-dire un revêtement d'épaisseur relativement importante), dans le but d'améliorer la résistance à l'abrasion et/ou aux rayures dudit revêtement et/ou de promouvoir son adhésion au substrat ou au revêtement sous-jacent. Une telle sous-couche, qui fait partie du revêtement interférentiel, a généralement une épaisseur de 100 à 200 nm. Elle est généralement de nature exclusivement minérale, par exemple constituée de dioxyde de silice SiO₂.

Généralement, une couche HI a une épaisseur de 10 à 120 nm, et une couche BI a une épaisseur de 10 à 100 nm.

Préférentiellement selon l'invention, l'épaisseur totale du revêtement interférentiel est inférieure à 1 µm, mieux inférieure ou égale à 780 nm, encore mieux inférieure ou égale à 500 nm. L'épaisseur totale du revêtement interférentiel est généralement supérieure à 100 nm, de préférence supérieure à 150 nm.

La machine de marquage est par exemple telle que décrite dans la demande de brevet WO 2015/040338 de la demanderesse, qui décrit tout particulièrement l'utilisation d'un laser Nd-YAG à des longueurs d'onde d'application de 230 à 290 nm, préférentiellement environ 266 nm.

Par exemple un laser Nd-YAG peut être utilisé selon l'invention, à 266 nm avec des impulsions de 1 ns, une énergie par impulsion de 3 µJ et une surface de point de marquage de 10 µm de diamètre.

Ce type de paramétrage du laser de marquage permet avantageusement de cibler une couche SnO₂ et d'enlever au moins partiellement la couche SnO₂ lorsqu'insolée, sans traverser le substrat, mais également d'enlever, lors de l'ablation de la partie de la couche SnO₂, la ou les couches présentes au-dessus de la couche SnO₂. Cela sera démontré dans les exemples ci-après.

Dans le cas où le revêtement interférentiel est un revêtement antireflet, son coefficient de réflexion Re est de préférence inférieur à 1,4% et de façon encore plus préférée inférieur à 0,85%.

Le procédé de marquage selon l'invention permet avantageusement l'obtention d'un motif de marquage très visible d'un observateur extérieur et peu, de préférence pas, visible du porteur d'article optique. En pratique, 2% de différence de coefficient de réflexion entre Re et Rm (Rm-Re = 0,02) correspond à une augmentation locale du reflet d'environ 200 à 300% selon l'angle de réflexion, l'augmentation perçue de la réflexion étant la suivante : (Rm-Re)/Re.

Dans le cas où le revêtement interférentiel est un revêtement antireflet, l'augmentation perçue de la réflexion est par exemple d'environ 0,02/0,0085 [soit (Rm-Re)/Re], soit 235%.

Comme revendiqué, la différence entre Rm et Re est, en valeur absolue, supérieure à 3%, de façon encore plus préférée supérieure à 5% (en quantité par rapport à une même lumière incidente). En général, la différence entre Rm et Re est inférieure à 50% de coefficient de réflexion Re, sauf quand le revêtement interférentiel est un miroir.

Selon un mode de réalisation, la différence entre Rm et Re est, en valeur absolue, comprise entre 5% et 25%, de préférence entre 7% et 20%.

Selon un mode de réalisation de l'invention, l'étape d'insolation est suivie d'une étape de nettoyage pour enlever toute trace des couches ablatées au cours de l'étape d'insolation.

Selon un mode de réalisation préféré de l'invention, le faisceau électromagnétique est émis par impulsion, et a une énergie par impulsion comprise dans un intervalle de 0,1 à 10 µJ, par exemple égale à 0,5 µJ, 1 µJ, 2 µJ ou 5 µJ, de préférence comprise dans un intervalle de 0,1 à 3 µJ, par exemple égale à 0,5 µJ, 1 µJ, 2 µJ ou 3 µJ.

De préférence, l'étape d'insolation est réalisée par émission d'un faisceau focalisé de rayonnement laser ultraviolet à impulsions présentant au moins les paramètres suivants :
- une longueur d'onde de rayonnement comprise dans un intervalle de 200 à 400 nm, de préférence de 200 à 300 nm,
- une durée d'impulsion comprise dans un intervalle de 0,5 à 5 ns, et
- une énergie par impulsion comprise dans un intervalle de 0,1 à 10 µJ, de préférence comprise dans un intervalle de 0,5 à 3 µJ,
ainsi que, au point de marquage, un diamètre de faisceau compris dans un intervalle de 5 à 50 µm.

Dans un mode de réalisation préféré de l'invention, lorsque la longueur d'onde de rayonnement du faisceau de rayonnement laser ultraviolet à impulsions réalisant l'étape d'insolation est comprise dans un intervalle de 200 à 300 nm, la couche intérieure est à base, de préférence constituée essentiellement, d'étain, de préférence d'oxyde d'étain, de manière encore plus préférée de dioxyde d'étain SnO₂.

« A base» signifie au sens de l'invention que la couche intérieure comprend au moins 50%, en masse, du composé par rapport à la masse totale de la couche intérieure.

« Constituée essentiellement » signifie au sens de l'invention que la proportion du composé dans ladite couche intérieure est supérieure ou égale à l'une des valeurs suivantes : 70%, 75%, 80%, 90%, 95%, 97%, 99%, 99,5%, 99,9%, 99,95%. Idéalement, ladite couche intérieure consiste en une couche de dioxyde d'étain SnO₂.

Les inventeurs ont en particulier noté que les couches à base d'étain, en particulier d'oxyde d'étain, tout particulièrement de dioxyde d'étain, réagissent sélectivement lors d'une illumination au moyen d'un faisceau laser ayant une longueur d'onde comprise entre 200 et 300 nm, lorsqu'elles sont présentes dans un revêtement interférentiel comportant par ailleurs uniquement des couches à base de silice ou de zircone. Dans cette configuration, les couches à base de silice ou de zircone sont sensiblement transparentes à la longueur d'onde tandis que les couches à base d'étain absorbent de l'énergie à cette longueur d'onde en quantité suffisante pour générer une destruction, voire une ablation locale de cette couche, sur une partie au moins de son épaisseur.

La couche intérieure peut contenir d'autres constituants, notamment des oxydes métalliques, en particulier des oxydes métalliques électriquement conducteurs qui sont de préférence transparents. Elle peut notamment comprendre de l'oxyde de titane et/ou de l'oxyde de zinc. De préférence, la couche intérieure ne contient pas d'indium, qu'il soit sous forme oxyde ou sous toute autre forme.

De préférence, la couche intérieure présente une épaisseur comprise dans un intervalle de 1 à 100 nm, de préférence de 2 à 25 nm, de façon encore plus préférée de 4 à 15 nm, la somme des épaisseurs des couches intérieure et extérieure étant comprise de 5 à 300 nm, de préférence de 45 à 175 nm.

La couche extérieure est généralement à base, de préférence constituée essentiellement, de silicium, de préférence d'oxyde de silicium, de manière encore plus préférée de dioxyde de silicium SiO₂.

Selon un mode de réalisation particulier de l'invention, la transmission dans le visible du revêtement interférentiel éventuellement revêtu et la transmission dans le visible de l'ensemble des couches allant du substrat à la couche extérieure sont sensiblement identiques. Cela est généralement réalisé par le fait que l'absorbance, dans le visible, est sensiblement identique (i.e. à 0,1 ou 0,2% près), que les couches ablatées soient ou non présentes. Ainsi, de façon générale, la différence de quantité de lumière transmise entre la zone ablatée (i.e. zone marquée, comprenant au moins un point de marquage voire un motif de marquage, réalisé par le procédé de marquage selon l'invention) et la zone non ablatée (ou non marquée, i.e. ne comprenant pas un tel motif de marquage) dépend principalement, au premier ordre, de la différence de réflexion entre ces zones. Pour une lentille ophtalmique claire comportant un revêtement antireflet, le taux de lumière visible transmise est généralement supérieur à 85%, voire à 90% ou même 95%. En particulier, la transmission, dans le visible, du revêtement interférentiel est proche de (0,99-Rm), où Rm est le coefficient de réflexion de ce revêtement. Dans ce cas, une différence de réflexion entre les deux zones, comprise entre 1% et 8%, conduit à un taux de lumière traversant le revêtement interférentiel au niveau de la zone ablatée compris entre 0,92 fois et 0,99 fois le taux de lumière traversant le revêtement dans la zone non ablatée. C'est cette faible différence qui rend le motif de marquage peu voire pas visible pour le porteur.

Selon un mode de réalisation préféré de l'invention, au moins une couche absorbante (c'est-à-dire qui absorbe au moins partiellement la lumière visible) est présente dans le revêtement interférentiel de l'invention, et est localement retirée, directement ou indirectement, lors de l'ablation de la couche intérieure par le faisceau électromagnétique. Dans ce cas, de préférence, l'ensemble des couches allant de la couche intérieure à la couche extérieure présente une absorption d'au moins 0,5% de la lumière visible transmise, par exemple au moins 1% de la lumière transmise et, de préférence, la couche absorbante présente une absorption (« Abs ») (ou autrement dit un coefficient d'absorption) comprise dans un intervalle de 0,5 à 1,5 fois, de préférence de 0,9 à 1,1 fois, la valeur absolue de la différence entre Re et Rm. Cela est réalisé par les paramètres que sont l'épaisseur et le coefficient d'absorption de la couche absorbante.

La couche absorbante est une couche du revêtement interférentiel et participe des propriétés de réflexion du revêtement interférentiel. Ce peut être la couche intérieure, la couche extérieure ou une autre couche positionnée entre ces deux couches.

Selon ce mode de réalisation, le taux de lumière transmis à travers le revêtement interférentiel ne dépend plus uniquement du coefficient de réflexion du revêtement interférentiel, mais aussi de l'absorption intrinsèque de la couche absorbante. Ainsi, le taux de lumière transmis à travers le revêtement interférentiel dans la zone non ablatée, correspond environ à [1 - Re - Abs] avec Abs représentant l'absorption de la lumière par la couche absorbante. Pour comparaison, le taux de lumière transmis à travers le revêtement interférentiel dans la zone ablatée, dans lequel la couche absorbante a été localement retirée (directement ou indirectement) lors de l'insolation, correspond environ à [1 - Rm]. En effet, l'absorption des couches du revêtement interférentiel autres que la couche absorbante est considérée comme nulle au premier ordre.

Ainsi, la différence de réflexion entre les deux zones reste [Re-Rm] ; par contre, la différence de taux de lumière transmis entre les deux zones est alors [Rm-Re-Abs].

En revanche, la différence de taux de lumière transmis entre la zone ablatée et la zone non ablatée est réduite. Elle est comprise de préférence entre - 0,5x(Rm-Re) et 0,5x(Rm-Re), étant entendu que (Rm-Re) représente la valeur absolue de la différence entre Re et Rm. Cette valeur dépend de la valeur de l'absorption de la couche absorbante. Dans un tel cas, la perception en transmission de la zone ablatée, par le porteur de lunette, est réduite au moins de moitié.

Dans un cas particulier, l'épaisseur et le coefficient d'absorption de la couche absorbante sont déterminés afin que l'absorption de lumière par la couche absorbante soit proche de la différence de réflexion et soit comprise entre 0,9 et 1,1 fois la valeur absolue de (Re-Rm). Dans ce cas, il est possible de considérer que la zone ablatée est invisible en transmission.

Selon un mode de réalisation de l'invention, le revêtement interférentiel est un revêtement antireflet. Dans ce cas, le revêtement antireflet comprend de préférence, depuis la surface du substrat éventuellement revêtu vers l'extérieur, une couche de ZrO₂, de 5 à 40 nm d'épaisseur, une couche de SiO₂, de 10 à 55 nm d'épaisseur, une couche de ZrO₂, de 20 à 150 nm d'épaisseur, une couche intérieure de SnO₂, de 4 à 15 nm d'épaisseur, et une couche extérieure de SiO₂, de 50 à 120 nm d'épaisseur.

Dans un mode de réalisation de l'invention, le revêtement interférentiel est lui-même revêtu (sur la face la plus éloignée du substrat) d'un revêtement de matériau protecteur, tel un revêtement anti-pluie, un revêtement anti-brouillard et/ou un revêtement anti-salissure, ledit procédé de marquage étant alors généralement suivi dans ce cas d'une étape de déprotection postérieure audit procédé de marquage, ladite étape de déprotection comprenant l'enlèvement de ce revêtement de matériau protecteur.

Selon un mode de réalisation particulier selon l'invention, l'étape d'insolation est réalisée en autant de points de marquage que nécessaire de façon à marquer localement une région de la surface principale du substrat de l'article optique au moyen de multiples points de marquage, ladite région formant un motif prédéfini dit motif de marquage. Dans un tel cas, il existe de préférence une continuité entre les points de marquage qui définissent la région formant motif de marquage. Une telle région de marquage comporte, de préférence, moins de 1% en surface de résidus des couches ablatées (par insolation directe ou indirecte). Un tel état peut être obtenu directement à l'issue du procédé de marquage, ou bien nécessiter une étape supplémentaire de brossage et de retrait, accessible à l'homme du métier. Cela diffère notablement et avantageusement des réalisations de l'état de la technique.

Dans un tel cas, de préférence, le marquage est effectué à un pas de dimension inférieure ou égale aux dimensions du point de marquage, c'est-à-dire inférieure ou égale au diamètre moyen d'une zone ablatée en un seul point de marquage, de façon à ce que les points de marquage montrent un recouvrement partiel. Par exemple le pas du marquage est compris entre 0,5 et 1 fois le diamètre de marquage d'une impulsion du faisceau lorsque le faisceau émet par impulsion. Si l'impulsion est reproduite de façon identique à chaque fois par la source électromagnétique, un mode de réalisation particulier est tel que le pas de marquage est égal au diamètre de marquage. Cela permet tout particulièrement et avantageusement selon l'invention de pouvoir effectuer un procédé de marquage en continu qui consomme le moins possible d'énergie électromagnétique. Cela est tout particulièrement effectif lorsque le faisceau électromagnétique est émis par impulsion, et a une énergie par impulsion comprise dans un intervalle de 0,1 à 3 µJ, par exemple égale à 0,5 µJ, 1 µJ, 2 µJ ou 3 µJ.

Par « pas », on entend selon l'invention la distance minimale entre les centres de deux points de marquage réalisés successivement.

De façon préférée, une seule impulsion est nécessaire par point de marquage.

L'invention concerne aussi un article optique comportant un substrat ayant une face principale revêtue d'un revêtement interférentiel multicouche, ledit revêtement interférentiel comprenant au moins deux couches de matériaux superposées dites couche intérieure et couche extérieure, la couche intérieure étant située entre le substrat et la couche extérieure, ledit article comprenant un motif de marquage à la surface du revêtement interférentiel, le motif de marquage étant formé par une pluralité de points de marquage sensiblement identiques, chaque point de marquage correspondant à l'absence localisée d'au moins un partie de l'épaisseur de la couche intérieure et de la totalité de toute couche située entre ladite surface et la couche intérieure, le motif de marquage étant de préférence continu.

De préférence, un tel article optique est obtenu par le procédé de marquage selon l'invention, dans lequel l'étape d'insolation est répétée plusieurs fois.

La zone de marquage est formée d'une pluralité de points de marquage, chaque point de marquage étant obtenu par insolation réalisant l'ablation par faisceau électromagnétique d'au moins une partie de l'épaisseur de la couche intérieure.

Par « à la surface du revêtement interférentiel, » on entend à la surface du revêtement interférentiel si celui-ci n'est pas lui-même revêtu par au moins une couche de revêtement et à la surface de la couche de revêtement la plus éloignée sur substrat si celui-ci est lui-même revêtu par au moins une couche de revêtement.

Par « motif de marquage continu », on entend selon l'invention que tout motif de marquage est formé de multiples points de marquage contigus, le pas entre deux points de marquage contigus étant de dimension inférieure ou égale à la plus petite des dimensions de ces deux points de marquage.

Les caractéristiques du revêtement interférentiel, en particulier des couches intérieure et extérieure, sont telles que décrites ci-dessus pour le procédé de marquage selon l'invention.

De préférence, l'article optique selon l'invention n'absorbe pas dans le visible ou absorbe peu dans le visible. Cela signifie, au sens de la présente demande, que son facteur de transmission τᵥ dans le visible, encore nommé facteur relatif de transmission dans le visible, est supérieur à 90%, de préférence supérieur à 95%, de façon plus préférée supérieur à 97% et de façon encore plus préférée supérieur à 99%.

De façon particulièrement préférée, l'absorption lumineuse de l'article optique selon l'invention est inférieure ou égale à 1.

Alternativement, l'article optique peut être une lentille teintée, dite solaire, ayant par exemple une transmission comprise entre 5% et 50 % selon sa classification sur l'échelle internationale de classement des lunettes solaires.

L'invention sera mieux comprise à la vue des dessins annexés sur lesquels :

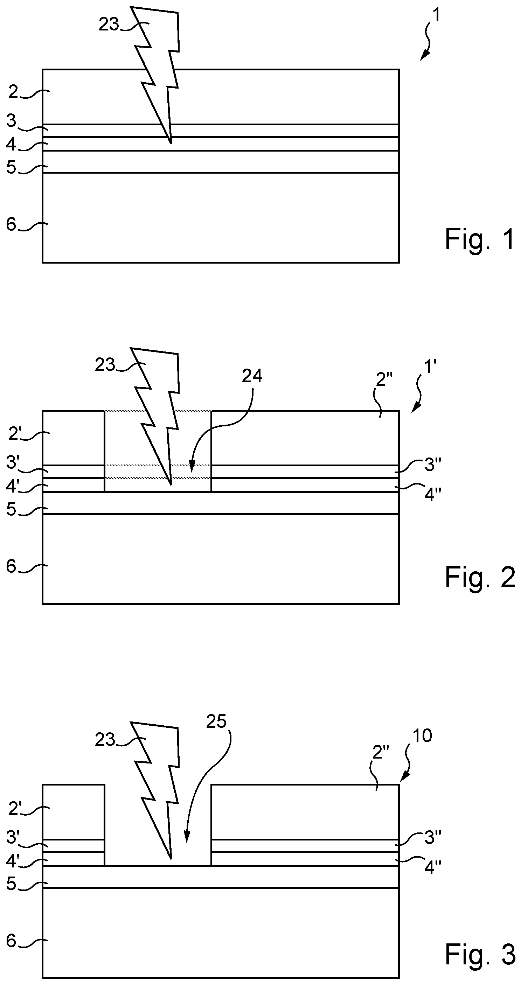

- Les Figures 1 à 3 représentent schématiquement un premier exemple de réalisation du procédé de marquage selon l'invention, la Figure 1 représentant schématiquement en plan de coupe le principe du procédé de marquage avant sa réalisation, la Figure 2 représentant schématiquement en plan de coupe le procédé de marquage en cours de réalisation, et la Figure 3 représentant schématiquement en plan de coupe le procédé de marquage en fin de réalisation ; et

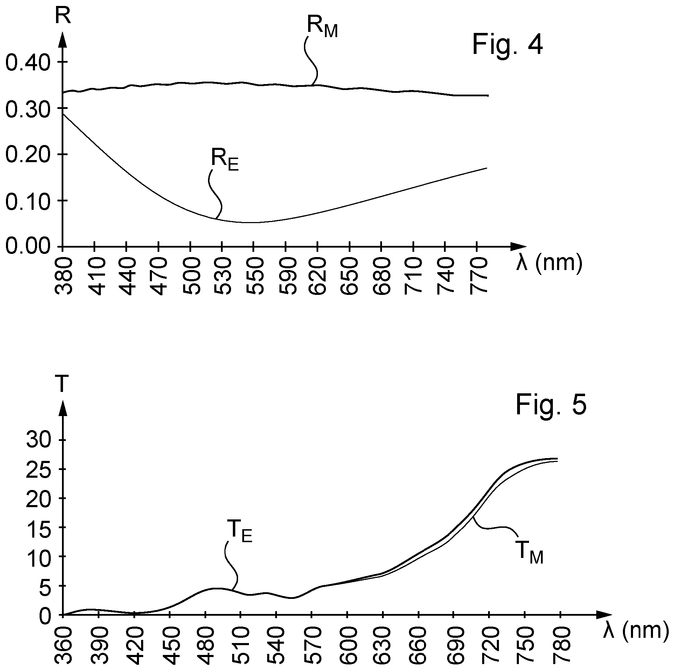

- Les Figures 4 et 5 illustrent les résultats obtenus en réflexion (R) et en transmission (T) pour le verre opthalmique (1) obtenu selon le premier exemple de réalisation des Figures 1 à 3, dans la zone du point de marquage (25) et dans les autres zones de la surface du verre ophtalmique ; et

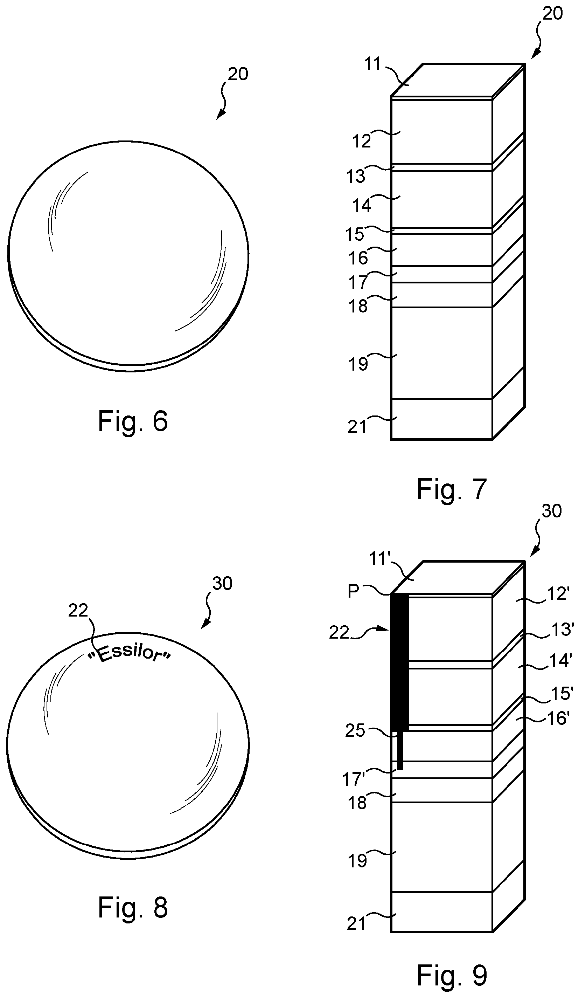

- Les Figures 6 à 9 représentent schématiquement un second exemple de réalisation du procédé de marquage selon l'invention, les Figures 6 et 7 représentant le verre ophtalmique avant la réalisation du procédé de marquage et les Figures 8 et 9 représentant le verre ophtalmique après la réalisation du procédé de marquage, plus précisément la Figure 6 représentant le verre ophtalmique en vue d'ensemble avant la réalisation du procédé de marquage, la Figure 7 représentant en perspective une section des couches présentes sur le verre ophtalmique avant la réalisation du procédé de marquage, la Figure 8 représentant le verre ophtalmique en vue d'ensemble après la réalisation du procédé de marquage, et la Figure 9 représentant en perspective une section des couches présentes sur le verre ophtalmique après la réalisation du procédé de marquage.

L'invention sera mieux comprise à la vue des exemples de réalisation qui suivent, en référence aux dessins annexés comme indiqué ci-dessus. Les Figures 1 à 9 sont explicitées dans les exemples ci-après.

### EXEMPLES

Les exemples qui suivent illustrent l'invention sans pour autant en limiter la portée.

Dans les deux exemples de réalisation suivants, la couche intérieure est constituée de dioxyde d'étain SnO₂ ; la couche extérieure est constituée d'oxyde de silice, à savoir soit du monoxyde de silice SiO, soit du dioxyde de silice SiO₂ ; et le faisceau électromagnétique est un faisceau laser à 266 nm (UV). La longueur d'onde de marquage est donc de 266 nm.

### Exemple 1 : marquage d'un verre ophtalmique constitué d'un substrat, d'une première couche chrome (« Cr1 »), d'une couche intérieure SnO₂, d'une deuxième couche chrome absorbante (« Cr2 »), et d'une couche extérieure SiO₂

Le verre ophtalmique (1) est constitué d'un substrat (6) sur lequel ont été superposées successivement une première couche (5) de métal (chrome, « Cr1 »), une couche intérieure (4) de dioxyde d'étain SnO₂, une deuxième couche (3) de métal (chrome, « Cr2 »), ou couche absorbante, et une couche extérieure (2) de monoxyde de silice SiO. Le substrat (6) est ici un substrat polarisé ou teinté comportant un revêtement anti-rayure de marque Mithril^{®}.

Une telle structure substrat-métal-diélectrique-métal-diélectrique est à rapprocher de celle du verre qui est marqué selon l'état de la technique US 2004/0095645, à l'exception du fait que, selon l'invention, une couche de SnO₂ a été ajoutée entre la couche Cr1 et la couche Cr2.

Les couches (2) SiO / (3) Cr2 / (4) SnO₂ / (5) Cr1 sont de nature et ont une épaisseur telles que le revêtement qu'elles constituent crée un effet interférentiel augmentant les reflets de façon à créer un miroir avec réflexion. Ce revêtement présente un coefficient de réflexion moyen d'environ 12 à 15%, avec une plus forte réflexion dans le violet.

La couche (5) chrome Cr2 absorbant très légèrement dans le visible réduit sensiblement la transmission globale du système, ce qui ne pose pas de problème dans le cas du verre ophtalmique (1) utilisé qui est ici un verre solaire.

La nature et les caractéristiques physique et optique des couches sont indiquées dans le tableau suivant :

| Numéro de couche à partir du substrat/ Référence de couche (illustration) | Matériau de la couche | Epaisseur de la couche (± 2 nm) |
|---|---|---|
| 1 / (5) | Cr | 15 nm |
| 2 / (4) | SnO₂ | 6 nm |
| 3 / (3) | Cr | 5 nm |
| 4 / (2) | SiO | 65 nm |

Le procédé de marquage selon l'invention a été réalisé au moyen d'un laser à impulsion émettant un faisceau à la longueur d'onde 266 nm avec des impulsions de durée 1 ns, une énergie par impulsion de 3 µJ et une surface de point de marquage d'environ 10 µm de diamètre.

Les Figures 1 à 3 illustrent schématiquement ce premier exemple de réalisation du procédé de marquage selon l'invention. Le faisceau laser 23 est représenté de façon très symbolique par un éclair qui se focalise sur la couche intérieure 4.

La Figure 1 représente schématiquement en plan de coupe le principe du procédé de marquage avant sa réalisation sur le verre ophtalmique 1. On y voit le substrat (6), sur lequel a été déposée la première couche (5) de chrome Cr1, sur laquelle se superposent la couche intérieure (4) de dioxyde d'étain SnO₂, puis la couche (3) de chrome Cr2, et enfin la couche extérieure (2) de monoxyde de silice SiO.

La Figure 2 représente schématiquement en plan de coupe le procédé de marquage en cours de réalisation par retrait local des couches (4), (3) et (2) par le faisceau électromagnétique (23) qui insole la couche intérieure (4) en SnO₂ et la détruit, entraînant le retrait des couches (3) et (2) indirectement lors de la destruction de la couche (4). On distingue la partie (24) des couches (4), (3) et (2) en cours de retrait, qui deviendra le point de marquage (25) de la Figure 3. Sur ce plan de coupe, la couche (4) se scinde en deux parties (4') et (4"), la couche (3) se scinde en deux parties (3') et (3") et la couche (2) se scinde en deux parties (2') et (2"). Le verre ophtalmique (1') sur lequel s'amorce le marquage comprend également la couche (5) sur le substrat (6).

La Figure 3 représente schématiquement en plan de coupe le procédé de marquage en fin de réalisation. Sur ce plan de coupe, les couches (4), (3) et (2) ont été ablatées suite à l'insolation par le faisceau électromagnétique (23), se scindant respectivement en deux parties (4') et (4"), en deux parties (3') et (3") et en deux parties (2') et (2"). Un verre ophtalmique gravé (10) est ainsi obtenu.

La réalisation ainsi schématisée a permis d'effectuer un point de marquage (25). La répétition de l'étape d'insolation du procédé de l'invention, permet de réaliser plusieurs points de marquage formant ainsi motif de marquage, tel qu'un logo.

Avantageusement, la couche chrome (5) Cr1, comprise entre la couche intérieure (4) et le substrat, n'absorbe que peu voire très peu la lumière émise à la longueur d'onde du laser (266 nm), ce qui la rend pratiquement insensible au faisceau électromagnétique de marquage. Elle n'est donc pas détruite par insolation par le faisceau électromagnétique de marquage. Il est donc possible de superposer les points de marquage sans risque de surgravure au niveau du recoupement entre deux points de marquage. Par conséquent, le procédé selon l'invention permet avantageusement de réaliser un marquage continu sur la surface du verre ophtalmique (1), tel qu'un logo de grande surface, homogène, sans effet « pointilliste ».

A contrario, les technologies de l'état de la technique désirant faire du marquage sans résidus par ablation laser doivent réaliser des points de marquage en superposition partielle ce qui implique une surgravure locale plus importante de deux points de marquage contigus par rapport au reste du motif, pouvant conduire par exemple à l'ablation locale d'au moins une couche supplémentaire, ici la couche (5) Cr1.

La Figure 4 illustre les résultats obtenus en réflexion (R) pour le verre ophtalmique (1) obtenu selon le premier exemple de réalisation des Figures 1 à 3, dans la zone ablatée du point de marquage (25) : Rₘ et dans la zone non ablatée de la surface du verre ophtalmique (1) : Rₑ.

On voit que le revêtement interférentiel (2, 3, 4, 5) est caractérisé par un spectre de réflexion spécifique Rₑ, illustré en Figure 4, et que dans la zone non ablatée le spectre de réflexion moyen Ref2, qui est d'environ 12 à 15%, réfléchit légèrement plus dans le violet. On voit également que la couche (5) Cr1, seule, présente sur le matériau anti-rayure, conduit la lentille à avoir localement un coefficient de réflexion Ref1 d'environ 33% (ce qui est supérieur à Ref2), et relativement homogène selon les longueurs d'ondes du visible.

Ainsi, lorsque le verre ophtalmique (1) est observé, l'observateur perçoit une réflexion supplémentaire dans la zone du marquage, en contraste avec la réflexion des points alentour.

La différence de coefficient de réflexion entre le point de marquage (25) et les autres zones (non ablatées) de la surface du verre ophtalmique (1) est donc d'environ 18% en moyenne, ce qui permet de former des motifs par différence d'intensité de réflexion mais aussi de teinte et de Chroma (respectivement « hue » et « Chroma » en anglais) en réflexion sur la surface du verre ophtalmique. Il y a en effet un facteur jusqu'à environ deux et demi dans les longueurs d'onde centrales du spectre du visible, entre le coefficient de réflexion Rₘ du motif formé par la zone ablatée du point de marquage (25) et le coefficient de réflexion de la zone non ablatée de la surface du verre ophtalmique (1).

Cette variation de teinte et de chroma peut être également réalisée au moyen de l'invention avec d'autres revêtements interférentiels que celui de l'exemple 1.

Par ailleurs, comme il apparaît des données ci-dessus, la teinte du reflet et l'intensité de cette teinte varie entre la zone ablatée du point de marquage (25) et la zone non ablatée de la surface du verre ophtalmique (1). Le point de marquage (25) présente une réflexion sensiblement homogène sur le spectre de la lumière visible, ce qui donne un reflet sensiblement blanc, ou en tout cas avec une faible intensité de teinte. A contrario, la zone non ablatée de la surface du verre ophtalmique (1) réfléchit plus particulièrement le violet, donnant une teinte globale plutôt violette au verre ophtalmique (1).

De préférence, l'absorbance A2 de la couche (3) Cr2 dans le visible est telle que l'équation suivante est vérifiée ou approchée : Ref2 + A2 = Ref1. Dans ce cas, la transmission de la lumière traversant le verre ophtalmique (1) dans la zone ablatée du point de marquage (25) est sensiblement identique à la transmission hors du marquage, dans la zone non ablatée de la surface du verre ophtalmique (1). Cela permet au porteur de verre ophtalmique de ne pratiquement pas percevoir de différence voire aucune différence de transmission au niveau du point de marquage (25). Celui-ci est donc visible pour un observateur extérieur et invisible pour le porteur du verre ophtalmique (1).

Ainsi, selon cet exemple de réalisation, l'absorbance, dans le visible (380-780 nm) de la couche (3) Cr2 est telle qu'elle est équivalente à la réduction de l'efficacité du revêtement interférentiel dépourvu des couches (2) SiO₂, (3) Cr2, et (4) SnO₂.

La Figure 5 montre la transmission (T) mesurée en fonction de la longueur d'onde, à travers le verre ophtalmique (1) obtenu selon le premier exemple de réalisation des Figures 1 à 3, dans la zone du point de marquage (25) : Tₘ et dans la zone non ablatée de la surface du verre ophtalmique (1) : Tₑ.

On voit que, lors de l'ablation d'une partie au moins de l'épaisseur de la couche intérieure (4), la couche (3) Cr2 est aussi retirée et ne participe plus, dans la zone ablatée du point de marquage (25), à absorber la lumière. En conséquence, comme cela est visible sur la courbe de la Figure 5, la transmission est sensiblement identique pour la zone ablatée du point de marquage (25) (courbe Tₘ) et pour la zone non ablatée de la surface du verre ophtalmique (1) (courbe Tₑ).

Ainsi, la réduction du taux de lumière traversant le verre ophtalmique (1) provoquée par l'absorption de la couche de chrome (3) Cr2 dans la zone non ablatée de la surface du verre ophtalmique (1) est approximativement équivalente à la réduction du taux de lumière traversant le verre ophtalmique (1) provoquée par la présence d'un plus grand coefficient de réflexion dans la zone ablatée du point de marquage (25).

Différentes variantes à ce premier exemple de réalisation peuvent être envisagées, toutes à la portée de l'homme du métier. Certaines de ces variantes sont explicitées ci-après.

Ainsi, la couche (5) Cr1 peut être remplacée par un revêtement de couches ayant chacune la propriété de ne pas trop absorber à la longueur d'onde de marquage.

De même, la couche (2) SiO et la couche (3) Cr2 peuvent être remplacées par un autre revêtement de couches semblables.

Enfin, il est possible que la couche (3) Cr2 ne soit pas absorbante, même légèrement, dans le visible (380-700 nm), ou ne soit pas présente. Cela est particulièrement le cas lorsque la couche intérieure (4) est elle-même choisie en un matériau absorbant dans la gamme de longueurs d'onde du visible.

### Exemple 2: marquage d'un verre ophtalmique constitué d'un substrat, d'une couche ZrO₂, d'une couche SiO₂, d'une couche ZrO₂, d'une couche intérieure SnO₂, d'une couche extérieure SiO₂, d'une couche DSX et d'une double couche temporaire

Le verre ophtalmique (20) est constitué d'un substrat (21) qui est un verre d'indice 1,5 de la société Essilor International^{®} comportant un revêtement anti-rayure de marque Mithril^{®}, sur lequel est superposé un revêtement interférentiel constitué d'un revêtement comportant de façon successive, en partant du vernis présent sur le substrat une première couche (18) d'oxyde de zirconium ZrO₂, une première couche (17) de dioxyde de silice SiO₂, une seconde couche (16) de dioxyde de zirconium ZrO₂, une couche (15) de dioxyde d'étain SnO₂, ou couche intérieure, une deuxième couche(14) de dioxyde de silice SiO₂, ou couche extérieure, une couche (13) antisalissure (hydrophobe et/ou oléophobe), une couche (12) de difluorure de magnésium MgF₂ d'épaisseur 37 nm et une couche (11) d'oxyde de magnésium MgO de quelque nanomètres d'épaisseur.

L'ensemble des couches (14, 15, 16, 17, 18), sans tenir compte des couches respectives 12 et 11 MgF₂ et MgO qui sont des couches temporaires, réalise un revêtement interférentiel qui est ici un revêtement antireflet, ayant des épaisseurs de couches calculées au moyen d'un logiciel connu de l'homme du métier (qui prend en considération la nature de ces couches) afin de présenter un coefficient de réflexion totale (Re) inférieur à 1%, par exemple 0,7 ou 0,8% selon les échantillons mesurés.

La nature et les caractéristiques physique et optique des couches du revêtement interférentiel sont indiquées dans le tableau suivant :

| Numéro de couche à partir du substrat/ Référence de couche (illustration) | Matériau de la couche | Indice optique de la couche | Epaisseur de la couche (± 3 nm) |
|---|---|---|---|
| 1 / (18) | ZrO₂ | 2,0038 | 30 nm |
| 2 / (17) | SiO₂ | 1,4741 | 40 nm |
| 3 / (16) | ZrO₂ | 2,0038 | 60 nm |
| 4 / (15) | SnO₂ | 1,8432 | 6 nm |
| 5 / (14) | SiO₂ | 1,4741 | 110 nm |

La réalisation du procédé selon l'invention vient faire une ablation locale de la couche SiO₂ extérieure 14, des couches 13, 12 et 11, extérieures à la couche extérieure SiO₂, ainsi qu'une ablation au moins partielle de la couche intérieure 15, en SnO₂. En ce point de marquage (P), la valeur de la réflexion mesurée dans la zone ablatée (Rm) est d'environ 8,5%, soit environ 10 fois plus que Re.

Les Figures 6 à 9 illustrent schématiquement ce second exemple de réalisation du procédé de marquage selon l'invention.

Les Figures 6 et 7 représentent le verre ophtalmique avant la réalisation du procédé de marquage et les Figures 8 et 9 représentent le verre ophtalmique après la réalisation du procédé de marquage.

La Figure 6 représente schématiquement le verre ophtalmique (20) en vue d'ensemble avant la réalisation du procédé de marquage.

La Figure 8 représente schématiquement le verre ophtalmique (30) en vue d'ensemble après la réalisation du procédé de marquage. On y voit le marquage ou gravure (22) en motif de marquage formant le mot « Essilor ».

La Figure 7 représente schématiquement en perspective une section des couches présentes sur le verre ophtalmique (20), avant la réalisation du procédé de marquage.

On y voit le substrat (21), sur lequel ont été successivement déposées une couche (19) de filtre UV « UL », une première couche (18) de ZrO₂, une première couche (17) de SiO₂, une seconde couche (16) de ZrO₂, une couche intérieure (15) de SnO₂, une deuxième couche de SiO₂, extérieure, (14), une couche (13) de revêtement DSX, une couche (12) de MgF₂ et une couche (11) de MgO.

La Figure 9 représente schématiquement en perspective une section des couches présentes sur le verre ophtalmique (20) après la réalisation du procédé de marquage.

Les couches (11), (12), (13), (14) et (15) ont été ablatées en un point de marquage (P) (ici représenté schématiquement en deux dimensions alors que c'est en réalité, comme explicité plus avant, sensiblement un cylindre qui, par la répétition de l'étape d'insolation du procédé de l'invention, fait partie du marquage (22), ce qui a conduit à l'obtention des couches (11'), (12'), (13'), (14') et (15'). Un verre ophtalmique gravé (30) est ainsi obtenu.

En pratique, au fond du point de marquage (P), on a constaté qu'il existe un léger marquage (25) (ici représenté schématiquement en deux dimensions alors que c'est en réalité sensiblement un cylindre) dans les couches (16) et (17) immédiatement présentes sous la couche (15). Le dioxyde de zirconium ZrO₂ de la couche (16) et le dioxyde de silice SiO₂ de la couche (17) absorbent donc légèrement la longueur d'onde de marquage. L'absorption étant relativement faible, ainsi qu'il a pu être constaté sur le marquage résultant, cela est compatible avec la performance du procédé de marquage selon l'invention car la visibilité du marquage n'est pas affectée.

### Exemple 3 : marquage d'un verre ophtalmique constitué d'un substrat, d'une sous-couche SiO₂, d'une couche ZrO₂, d'une couche SiO₂, d'une couche ZrO₂, d'une couche intérieure SnO₂, d'une couche extérieure SiO₂, d'une couche DSX et d'une double couche temporaire

Les Figures 6 à 9 illustrent schématiquement ce troisième exemple de réalisation du procédé de marquage selon l'invention, seule la nature de la couche (19) étant modifiée par rapport au deuxième exemple de réalisation.

Le verre ophtalmique (20) est constitué d'un substrat (21) qui est un verre d'indice 1,5 de la société Essilor International^{®} comportant un revêtement anti-rayure de marque Mithril^{®}, et comportant par-dessus un revêtement interférentiel comportant de façon successive, en partant du vernis présent sur le substrat : une couche (19) épaisse en SiO₂, une première couche (18) d'oxyde de zirconium ZrO₂, une première couche (17) de dioxyde de silice SiO₂, une seconde couche (16) de dioxyde de zirconium ZrO₂, une couche (15) de dioxyde d'étain SnO₂, ou couche intérieure, une deuxième couche (14) de dioxyde de silice SiO₂, ou couche extérieure, une couche (13) de revêtement antisalissure (hydrophobe et/ou oléophobe), une couche (12) de difluorure de magnésium MgF₂ d'épaisseur 37 nm et une couche (11) d'oxyde de magnésium MgO de quelques nanomètres d'épaisseur.

L'ensemble des couches (14, 15, 16, 17 et 18), sans tenir compte des couches respectives 12 et 11 MgF₂ et MgO qui sont des couches temporaires, réalise un revêtement interférentiel qui est ici un revêtement antireflet, ayant des épaisseurs de couches calculées au moyen d'un logiciel connu de l'homme du métier (qui prend en considération la nature de ces couches) afin de présenter un coefficient de réflexion totale inférieur à 1%, par exemple 0,7% ou 0,8% selon les échantillons mesurés.

La nature et les caractéristiques physique et optique des couches sont indiquées dans le tableau suivant :

| Numéro de couche à partir du substrat/ Référence de couche (illustration) | Matériau de la couche | Indice optique de la couche | Epaisseur de la couche (±3 nm) |
|---|---|---|---|
| 1 / (19) | SiO₂ | 1,4658 | 150 nm |
| 2 / (18) | ZrO₂ | 2,0038 | 20 nm |
| 3 / (17) | SiO₂ | 1,4741 | 20 nm |
| 4 / (16) | ZrO₂ | 2,0038 | 100 nm |
| 5 / (15) | SnO₂ | 1,8432 | 6 nm |
| 6/(14) | SiO₂ | 1,4741 | 75 nm |

La réalisation du procédé selon l'invention, selon les conditions opératoires de l'exemple 1 et de la même façon qu'à l'exemple 2, vient à créer un motif à la surface de la lentille ophtalmique par ablation locale de la couche SiO₂ extérieure 14, des couches 13, 12 et 11, extérieures à la couche extérieure SiO₂ 14, ainsi qu'une ablation au moins partielle de la couche intérieure 15, en SnO₂, qui est la couche intérieure ablatée par le faisceau électromagnétique. En ce point de marquage (P), la valeur de la réflexion mesurée dans la zone ablatée (Rm) est proche de 10%, plus précisément entre 9,5%, et 10,5% selon les échantillons, soit environ 12 fois plus que Re.

## Revendications

1. Procédé de marquage d'article optique (1,20) comportant au moins une étape d'utilisation d'une machine de marquage sur un article optique (1,20) :
La machine de marquage étant une machine de marquage par faisceau électromagnétique (23), de préférence par faisceau laser, comportant une source électromagnétique, de préférence une source laser, configurée pour émettre un faisceau ayant une longueur d'onde de rayonnement déterminée dite longueur d'onde de marquage ;
L'article optique étant un article optique (1, 20) comportant un substrat (6, 21) ayant une face principale revêtue d'un revêtement interférentiel (2,3,4,5 ; 14,15,16,17,18,19), ledit revêtement interférentiel comprenant au moins deux couches superposées dites couche intérieure (4,15) et couche extérieure (2,14), la couche intérieure étant située entre le substrat et la couche extérieure, le revêtement interférentiel étant tel qu'il présente un coefficient de réflexion Re dans le domaine visible (380 - 780 nm) ;
L'utilisation comprenant l'insolation d'au moins la couche intérieure (4,15) en un point donné dit point de marquage (25,P), au moyen du faisceau laser à la longueur d'onde de marquage, de façon à ablater, au point de marquage, la couche intérieure, sur au moins une partie de son épaisseur, et toute couche située entre la source électromagnétique et la couche intérieure; et étant telle que la zone ablatée présente un coefficient de réflexion Rm dans le domaine visible (380-780 nm), Rm étant différent de Re, en valeur absolue, d'au moins 3%, de façon encore plus préférée supérieure à 5%, et le coefficient de réflexion Rm de la zone ablatée étant supérieur au coefficient de réflexion Re du revêtement interférentiel ;
La couche intérieure absorbant la longueur d'onde de marquage de manière plus importante que toute couche située entre la source électromagnétique et la couche intérieure.

2. Procédé de marquage selon la revendication 1, tel que l'étape d'insolation est réalisée par émission d'un faisceau focalisé de rayonnement laser ultraviolet à impulsions présentant au moins les paramètres suivants :
- une longueur d'onde de rayonnement comprise dans un intervalle de 200 à 400 nm, de préférence de 200 à 300 nm, et
- une durée d'impulsion comprise dans un intervalle de 0,1 à 5 ns, et
- une énergie par impulsion comprise dans un intervalle de 0,1 à 10 µJ, de préférence comprise dans un intervalle de 0,5 à 3 µJ,
ainsi que, au point de marquage (24, P), un diamètre de faisceau compris dans un intervalle de 5 à 50 µm.

3. Procédé de marquage selon l'une des revendications 1 ou 2, tel que, lorsque la longueur d'onde de rayonnement du faisceau de rayonnement laser ultraviolet à impulsions réalisant l'étape d'insolation est comprise dans un intervalle de 200 à 300 nm, la couche intérieure (4,15) est à base, de préférence constituée essentiellement, d'étain, de préférence d'oxyde d'étain, de manière encore plus préférée de dioxyde d'étain SnO₂.

4. Procédé de marquage selon l'une des revendications 1 à 3, tel que la couche intérieure (4,15) présente une épaisseur comprise dans un intervalle de 1 à 100 nm, de préférence de 2 à 25 nm, de façon encore plus préférée de 4 à 15 nm, la somme des épaisseurs des couches intérieure (4,15) et extérieure (2, 14) étant comprise de 5 à 300 nm, de préférence de 45 à 175 nm.

5. Procédé de marquage selon l'une des revendications 1 à 4, tel que le revêtement interférentiel (2,3,4,5) comporte au moins une couche absorbante (3).

6. Procédé de marquage selon la revendication 5, tel que l'ensemble des couches allant de la couche intérieure à la couche extérieure présente une absorption d'au moins 0,5 % de la lumière visible transmise et, de préférence, une absorption comprise dans un intervalle de 0,5 à 1,5 fois, de préférence de 0,9 à 1,1 fois, la valeur absolue de la différence entre Re et Rm.

7. Procédé de marquage selon l'une des revendications 1 à 6, tel que la différence de taux de lumière transmis entre la zone ablatée et la zone non ablatée est comprise entre - 0,5x(Rm-Re) et 0,5x(Rm-Re), étant entendu que (Rm-Re) représente la valeur absolue de la différence entre Re et Rm.

8. Procédé de marquage selon l'une des revendications 1 à 7, tel que le revêtement interférentiel est un revêtement antireflet (14,15,16,17,18) et comprend, depuis la surface du substrat ou d'un vernis présent sur ce substrat, vers l'extérieur, une couche (18) de ZrO₂, de 5 à 40 nm d'épaisseur, une couche (17) de SiO₂, de 10 à 55 nm d'épaisseur, une couche (16) de ZrO₂, de 20 à 150 nm d'épaisseur, une couche intérieure (15) de SnO₂, de 4 à 15 nm d'épaisseur, et une couche extérieure (14) de SiO₂, de 50 à 120 nm d'épaisseur.

9. Procédé de marquage selon l'une des revendications 1 à 8, tel que le revêtement interférentiel est lui-même revêtu d'un revêtement de surface (13, 12, 11), tel un revêtement anti-pluie, un revêtement anti-brouillard, un revêtement anti-salissure et/ou au moins une couche de matériau protecteur.

10. Procédé de marquage selon l'une des revendications 1 à 9, tel que l'étape d'insolation est réalisée en autant de points de marquages que nécessaire de façon à marquer localement une région de la surface principale du substrat de l'article optique au moyen de multiples points de marquage, ladite région formant un motif prédéfini (22) dit motif de marquage.

11. Procédé de marquage selon la revendication 10, tel qu'il existe une continuité entre les points de marquage qui définissent la région formant motif de marquage, ladite région comportant de préférence moins de 1% en surface de résidus des couches ablatées.

12. Procédé de marquage selon l'une des revendications 10 ou 11, tel que le marquage est effectué à un pas de dimension inférieure ou égale aux dimensions du point de marquage.

13. Procédé de marquage selon l'une des revendications 1 à 12, tel que la réflexion au point de marquage a une couleur, en saturation et/ou en teinte, différente de celle de la réflexion de la zone non ablatée.

14. Article optique (30) comportant un substrat (21) ayant une face principale revêtue d'un revêtement interférentiel (14,15,16,17,18), ledit revêtement interférentiel comprenant au moins deux couches de matériaux superposées dites couche intérieure (15) et couche extérieure (14), la couche intérieure étant située entre le substrat et la couche extérieure, le revêtement interférentiel étant un revêtement antireflet (14,15,16,17,18) et comprenant, depuis une surface du substrat ou d'un vernis présent sur ce substrat, vers l'extérieur, une couche (18) de ZrO₂, de 5 à 40 nm d'épaisseur, une couche (17) de SiO₂, de 10 à 55 nm d'épaisseur, une couche (16) de ZrO₂, de 20 à 150 nm d'épaisseur, la couche intérieure (15) étant de SnO₂, de 4 à 15 nm d'épaisseur, et la couche extérieure (14) étant de SiO₂, de 50 à 120 nm d'épaisseur, le revêtement interférentiel étant tel qu'il présente un coefficient de réflexion Re dans le domaine visible (380 - 780 nm);
Ledit article (30) comprenant un motif de marquage (22) à la surface du revêtement interférentiel, le motif de marquage (22) étant formé par une pluralité de points de marquage (P) sensiblement identiques, chaque point de marquage correspondant à l'absence localisée d'au moins une partie de l'épaisseur de la couche intérieure (15) et de toute couche (14, 13, 12, 11) située entre ladite surface et la couche intérieure, la zone ablatée présentant un coefficient de réflexion Rm dans le domaine visible (380-780 nm) tel que Re est différent de Rm d'au moins 3%, de façon encore plus préférée supérieure à 5%, et le coefficient de réflexion Rm de la zone ablatée étant supérieur au coefficient de réflexion Re du revêtement interférentiel, les coefficients de réflexion Re et Rm correspondant aux taux de lumière réfléchie par la surface d'un article optique, illuminée par l'illuminant D65, le motif de marquage (22) étant de préférence continu.

## Patentansprüche

1. Verfahren zur Kennzeichnung eines optischen Artikels (1,20), umfassend mindestens einen Schritt der Verwendung einer Kennzeichnungsmaschine auf einem optischen Artikel (1,20):
Wobei die Kennzeichnungsmaschine eine Maschine zur Kennzeichnung durch elektromagnetischen Strahl (23), bevorzugt durch Laserstrahl, ist, die eine elektromagnetische Quelle, bevorzugt eine Laserquelle, umfasst, die dazu ausgestaltet ist, einen Strahl zu emittieren, der eine bestimmte Strahlungswellenlänge, Kennzeichnungswellenlänge genannt, hat;
Wobei der optische Artikel ein optischer Artikel (1, 20) ist, der ein Substrat (6, 21) mit einer mit einer Interferenzbeschichtung (2,3,4,5; 14,15,16,17,18,19) beschichteten Hauptseite umfasst, wobei die Interferenzbeschichtung mindestens zwei übereinander liegende Schichten, innere Schicht (4,15) und äußere Schicht (2,14) genannt, beinhaltet, wobei die innere Schicht zwischen dem Substrat und der äußeren Schicht gelegen ist, wobei die Interferenzbeschichtung dergestalt ist, dass sie einen Reflexionskoeffizienten Re im sichtbaren Bereich (380-780 nm) aufweist;
Wobei die Verwendung die Bestrahlung mindestens der inneren Schicht (4,15) in einem gegebenen Punkt, Kennzeichnungspunkt (25,P) genannt, mittels des Laserstrahls mit der Kennzeichnungswellenlänge beinhaltet, so dass an dem Kennzeichnungspunkt die innere Schicht über mindestens einen Teil ihrer Dicke und jede zwischen der elektromagnetischen Quelle und der inneren Schicht gelegene Schicht abgetragen werden; und
dergestalt ist, dass der abgetragene Bereich einen Reflexionskoeffizienten Rm im sichtbaren Bereich (380-780 nm) aufweist wobei Rm als absoluter Wert um mindestens 3 % noch bevorzugter um mehr als 5 %, von Re verschieden ist, und wobei der Reflexionskoeffizient Rm des abgetragenen Bereichs größer als der Reflexionskoeffizient Re der Interferenzbeschichtung ist;
Wobei die innere Schicht die Kennzeichnungswellenlänge stärker absorbiert als jede zwischen der elektromagnetischen Quelle und der inneren Schicht gelegene Schicht.

2. Verfahren zur Kennzeichnung nach Anspruch 1, derart, dass der Schritt des Bestrahlens durch impulsweises Emittieren eines gebündelten Strahls ultravioletter Laserstrahlung ausgeführt wird, der mindestens die folgenden Parameter aufweist:
- eine Strahlungswellenlänge, die in einem Intervall von 200 bis 400 nm, bevorzugt von 200 bis 300 nm, liegt, und
- eine Impulsdauer, die in einem Intervall von 0,1 bis 5 ns liegt, und
- eine Energie je Impuls, die in einem Intervall von 0,1 bis 10 µJ liegt, bevorzugt in einem Intervall von 0,5 bis 3 µJ liegt,
sowie, am Kennzeichnungspunkt (24, P), einen Strahldurchmesser, der in einem Intervall von 5 bis 50 µm liegt.

3. Verfahren zur Kennzeichnung nach einem der Ansprüche 1 oder 2, derart, dass, wenn die Strahlungswellenlänge des impulsweisen ultravioletten Laserstrahlungsstrahls, der den Bestrahlungsschritt ausführt, in einem Intervall von 200 bis 300 nm liegt, die innere Schicht (4,15) auf Zinn, bevorzugt Zinnoxid, noch bevorzugter Zinndioxid SnO₂ basiert und bevorzugt daraus besteht.

4. Verfahren zur Kennzeichnung nach einem der Ansprüche 1 bis 3, derart, dass die innere Schicht (4,15) eine Dicke aufweist, die in einem Intervall von 1 bis 100 nm, bevorzugt von 2 bis 25 nm, noch bevorzugter von 4 bis 15 nm liegt, wobei die Summe der Dicken der inneren (4,15) und äußeren (2, 14) Schichten zwischen 5 und 300 nm, bevorzugt zwischen 45 und 175 nm liegt.

5. Verfahren zur Kennzeichnung nach einem der Ansprüche 1 bis 4, derart, dass die Interferenzbeschichtung (2,3,4,5) mindestens eine absorbierende Schicht (3) umfasst.

6. Verfahren zur Kennzeichnung nach Anspruch 5, derart, dass die Gesamtheit der Schichten von der inneren Schicht bis zu der äußeren Schicht eine Absorption von mindestens 0,5 % des transmittieren sichtbaren Lichts, bevorzugt eine Absorption in einem Intervall vom 0,5- bis zum 1,5-Fachen, bevorzugt vom 0,9- bis 1,1-Fachen des absoluten Werts der Differenz zwischen Re und Rm aufweist.

7. Verfahren zur Kennzeichnung nach einem der Ansprüche 1 bis 6, derart, dass die Differenz des Anteils des transmittierten Lichts zwischen dem abgetragenen Bereich und dem nicht abgetragenen Bereich zwischen - 0,5x(Rm-Re) und 0,5x(Rm-Re) liegt, wobei (Rm-Re) den absoluten Wert der Differenz zwischen Re und Rm repräsentiert.

8. Verfahren zur Kennzeichnung nach einem der Ansprüche 1 bis 7, derart, dass die Interferenzbeschichtung eine Antireflexbeschichtung (14,15,16,17,18) ist und, von der Oberfläche des Substrats oder eines auf diesem Substrat vorhandenen Lacks aus nach außen, eine Schicht (18) aus ZrO₂ mit 5 bis 40 nm Dicke, eine Schicht (17) aus SiO₂ mit 10 bis 55 nm Dicke, eine Schicht (16) aus ZrO₂ mit 20 bis 150 nm Dicke, eine innere Schicht (15) aus SnO₂ mit 4 bis 15 nm Dicke und eine äußere Schicht (14) aus SiO₂ mit 50 bis 120 nm Dicke umfasst.

9. Verfahren zur Kennzeichnung nach einem der Ansprüche 1 bis 8, derart, dass die Interferenzbeschichtung selbst mit einer Oberflächenbeschichtung (13, 12, 11) wie einer regenabweisenden Beschichtung, einer Anti-Beschlag-Beschichtung, einer schmutzabweisenden Beschichtung und/oder mindestens einer Schicht aus schützendem Material beschichtet ist.

10. Verfahren zur Kennzeichnung nach einem der Ansprüche 1 bis 9, derart, dass der Schritt des Bestrahlens an so vielen Kennzeichnungspunkten wie erforderlich ausgeführt wird, so dass lokal eine Region der Hauptoberfläche des Substrats des optischen Artikels durch zahlreiche Kennzeichnungspunkte gekennzeichnet wird, wobei die Region ein vorgegebenes Muster (22), Kennzeichnungsmuster genannt, bildet.

11. Verfahren zur Kennzeichnung nach Anspruch 10, derart, dass eine Kontinuität zwischen den Kennzeichnungspunkten besteht, welche die ein Kennzeichnungsmuster bildende Region definieren, wobei die Region bevorzugt weniger als 1 % der Oberfläche von Resten der abgetragenen Schichten umfasst.

12. Verfahren zur Kennzeichnung nach einem der Ansprüche 10 oder 11, derart, dass die Kennzeichnung mit einer Schrittweite mit einem Maß ausgeführt wird, dass kleiner oder gleich den Abmessungen des Kennzeichnungspunktes ist.

13. Verfahren zur Kennzeichnung nach einem der Ansprüche 1 bis 12, derart, dass die Reflexion am Kennzeichnungspunkt eine Farbe, im Hinblick auf Sättigung und/oder Farbton, hat, die verschieden von derjenigen der Reflexion des nicht abgetragenen Bereichs ist.

14. Optischer Artikel (30), der ein Substrat (21) mit einer mit einer Interferenzbeschichtung (14,15,16,17,18) beschichteten Hauptseite umfasst, wobei die Interferenzbeschichtung mindestens zwei übereinander liegende Schichten, innere Schicht (15) und äußere Schicht (14) genannt, umfasst, wobei die innere Schicht zwischen dem Substrat und der äußeren Schicht gelegen ist, wobei die Interferenzbeschichtung eine Antireflexbeschichtung (14,15,16,17,18) ist und, von einer Oberfläche des Substrats oder eines auf diesem Substrat vorhandenen Lack aus nach außen, eine Schicht (18) aus ZrO₂ mit 5 bis 40 nm Dicke, eine Schicht (17) aus SiO₂ mit 10 bis 55 nm Dicke, eine Schicht (16) aus ZrO₂ mit 20 bis 150 nm Dicke umfasst, wobei die innere Schicht (15) aus SnO₂ mit 4 bis 15 nm Dicke ist und wobei die äußere Schicht (14) aus SiO₂ mit 50 bis 120 nm Dicke ist, wobei die Interferenzbeschichtung dergestalt ist, dass sie einen Reflexionskoeffizienten Re im sichtbaren Bereich (380 - 780 nm) aufweist;
Wobei der Artikel (30) ein Kennzeichnungsmuster (22) an der Oberfläche der Interferenzbeschichtung umfasst, wobei das Kennzeichnungsmuster (22) durch eine Vielzahl von im Wesentlichen identischen Kennzeichnungspunkten (P) gebildet wird, wobei jeder Kennzeichnungspunkt dem lokalisierten Fehlen von mindestens einem Teil der Dicke der inneren Schicht (15) und jeder Schicht (14, 13, 12, 11), die zwischen der Oberfläche und der inneren Schicht gelegen ist, entspricht, wobei der abgetragene Bereich einen Reflexionskoeffizienten Rm im sichtbaren Bereich (380-780 nm) derart aufweist, dass Re von Rm um mindestens 3 %, noch bevorzugter mehr als 5 % verschieden ist und der Reflexionskoeffizient Rm des abgetragenen Bereichs größer als der Reflexionskoeffizient Re der Interferenzbeschichtung ist, wobei die Reflexionskoeffizienten Re und Rm den Anteilen des durch die Oberfläche eines mit der Lichtart D65 beleuchteten optischen Artikels reflektierten Lichts entsprechen, wobei das Kennzeichnungsmuster (22) bevorzugt kontinuierlich ist.

## Claims

1. Method for marking an optical article (1, 20), said method including at least one step of use of a marking machine on an optical article (1, 20):
the marking machine being a marking machine that marks with an electromagnetic beam (23), preferably with a laser beam, said marking machine including an electromagnetic source, preferably a laser source, configured to emit a beam having a set radiation wavelength called the marking wavelength;
the optical article being an optical article (1, 20) including a substrate (6, 21) having a main face coated with an interference coating (2, 3, 4, 5; 14, 15, 16, 17, 18, 19), said interference coating comprising at least two superposed layers called the interior layer (4, 15) and the exterior layer (2, 14), the interior layer being located between the substrate and the exterior layer, the interference coating being such that it has a reflection coefficient Re in the visible domain (380-780 nm);
the use comprising irradiating at least the interior layer (4, 15) in a given spot called the marking spot (25, P), by means of the laser beam at the marking wavelength, so as to ablate, in the marking spot, the interior layer, over at least one portion of its thickness, and any layer located between the electromagnetic source and the interior layer; and being such that the ablated zone has a reflection coefficient Rm in the visible domain (380-780 nm), Rm being different from Re, in absolute value, by at least 3% and even more preferably more than 5%, and the reflection coefficient Rm of the ablated zone being greater than the reflection coefficient Re of the interference coating;
the interior layer absorbing the marking wavelength more greatly than any layer located between the electromagnetic source and the interior layer.

2. Marking method according to Claim 1, such that the irradiating step is carried out by emitting a focused beam of pulsed ultraviolet laser radiation having at least the following parameters:
- a radiation wavelength comprised in an interval of 200 to 400 nm and preferably of 200 to 300 nm, and
- a pulse duration comprised in an interval of 0.1 to 5 ns, and
- an energy per pulse comprised in an interval of 0.1 to 10 µJ and preferably comprised in an interval of 0.5 to 3 µJ,
and, in the marking spot (24, P), a beam diameter comprised in an interval of 5 to 50 µm.

3. Marking method according to either of Claims 1 and 2, such that, when the radiation wavelength of the beam of pulsed ultraviolet laser radiation performing the irradiating step is comprised in an interval of 200 to 300 nm, the interior layer (4, 15) is based on, and preferably essentially consists of, tin, preferably tin oxide and even more preferably tin dioxide SnO₂.

4. Marking method according to one of Claims 1 to 3, such that the interior layer (4, 15) has a thickness comprised in an interval of 1 to 100 nm, preferably of 2 to 25 nm and even more preferably of 4 to 15 nm, the sum of the thicknesses of the interior layer (4, 15) and of the exterior layer (2, 14) being comprised between 5 and 300 nm and preferably between 45 and 175 nm.

5. Marking method according to one of Claims 1 to 4, such that the interference coating (2, 3, 4, 5) includes at least one absorbent layer (3).

6. Marking method according to Claim 5, such that all the layers counted from the interior layer to the exterior layer together absorb at least 0.5% of the transmitted visible light and, preferably, have an absorption comprised in an interval of 0.5 to 1.5 times and preferably 0.9 to 1.1 times the absolute value of the difference between Re and Rm.

7. Marking method according to one of Claims 1 to 6, such that the difference between the amount of light transmitted by the ablated zone and by the unablated zone is comprised between - 0.5x(Rm-Re) and 0.5x(Rm-Re), (Rm-Re) being understood to represent the absolute value of the difference between Re and Rm.

8. Marking method according to one of Claims 1 to 7, such that the interference coating is an antireflection coating (14, 15, 16, 17, 18) and comprises, from the surface of the substrate or of a varnish present on the substrate, to the exterior, a layer (18) of ZrO₂, of 5 to 40 nm thickness, a layer (17) of SiO₂, of 10 to 55 nm thickness, a layer (16) of ZrO₂, of 20 to 150 nm thickness, an interior layer (15) of SnO₂, of 4 to 15 nm thickness, and an exterior layer (14) of SiO₂, of 50 to 120 nm thickness.

9. Marking method according to one of Claims 1 to 8, such that the interference coating is itself coated with a surface coating (13, 12, 11), such as a rain-repellent coating, an anti-fog coating, an anti-fouling coating and/or at least one layer of protective material.

10. Marking method according to one of Claims 1 to 9, such that the irradiating step is carried out in as many marking spots as necessary so as to locally mark a region of the main surface of the substrate of the optical article by means of multiple marking spots, said region forming a predefined pattern (22) called the marking pattern.

11. Marking method according to Claim 10, such that there is a continuity between the marking spots that define the region forming the marking pattern, said region preferably including less than 1% per unit area of residues from the ablated layers.

12. Marking method according to either of Claims 10 and 11, such that the marking is carried out with a pitch of dimension smaller than or equal to the dimensions of the marking spot.

13. Marking method according to one of Claims 1 to 12, such that the reflection at the marking spot has a colour, in saturation and/or in hue, different from that of the reflection of the unablated zone.

14. Optical article (30) including a substrate (21) having a main face coated with an interference coating (14, 15, 16, 17, 18), said interference coating comprising at least two superposed layers of materials called the interior layer (15) and the exterior layer (14), the interior layer being located between the substrate and the exterior layer, the interference coating being an antireflection coating (14, 15, 16, 17, 18) and comprising, from a surface of the substrate or of a varnish present on the substrate, to the exterior, a layer (18) of ZrO₂, of 5 to 40 nm thickness, a layer (17) of SiO₂, of 10 to 55 nm thickness, a layer (16) of ZrO₂, of 20 to 150 nm thickness, the interior layer (15) being of SnO₂, of 4 to 15 nm thickness, and the exterior layer (14) being of SiO₂, of 50 to 120 nm thickness, the interference coating being such that it has a reflection coefficient Re in the visible domain (380-780 nm);
said article (30) comprising a marking pattern (22) on the surface of the interference coating, the marking pattern (22) being formed by a plurality of substantially identical marking spots (P), each marking spot corresponding to the localized absence of at least one portion of the thickness of the interior layer (15) and of any layer (14, 13, 12, 11) located between said surface and the interior layer, the ablated zone having a reflection coefficient Rm in the visible domain (380-780 nm) such that Re is different from Rm by at least 3% and even more preferably more than 5%, and the reflection coefficient Rm of the ablated zone being greater than the reflection coefficient Re of the interference coating, the reflection coefficients Re and Rm corresponding to the amount of light reflected by the surface of an optical article, illuminated by illuminant D65, the marking pattern (22) preferably being continuous.
